# EUROPEAN PATENT SPECIFICATION

(11) **EP 2 283 267 B1**
(45) Date of publication and mention of the grant of the patent: **28.08.2013**
(21) Application number: 09738473.9
(22) Date of filing: 28.04.2009
(51) Int. Cl.: F16L 23/12, F16L 58/18

(54) **PROFILED GASKET FOR LINED PIPING**
PROFILIERTE DICHTUNG FÜR BESCHICHTETE ROHRLEITUNGEN
JOINT PROFILE POUR CONDUIT REVETU

(30) Priority: 01.05.2008 US 49554
(43) Date of publication of application: 16.02.2011
(73) Proprietor: Rhodes Technologies, Coventry, RI 02816 (US)
(72) Inventor: GOODE, Sidney, H., South Kingstown RI 02879 (US)
(74) Representative: Maiwald, Walter
(86) International application number: PCT/IB2009/005597
(87) International publication number: WO 2009/133460

(56) References cited:
- FR-A- 883 048
- GB-A- 638 010
- GB-A- 836 825
- US-A- 2 919 936
- US-A- 3 702 199
- US-B1- 7 107 662

## Description

The present invention relates to lined piping systems, and more particularly to a profiled gasket for flanged joints in a lined piping system.

### BACKGROUND OF THE INVENTION

Internally lined piping systems are used in numerous commercial applications by the pharmaceutical, chemical, petroleum, food, and other industries for transporting and processing products and chemicals in dry, liquid, or gaseous forms and combinations thereof. Lined piping generally includes two components: (1) a tubular metallic outer jacket or pipe which provides strength for pressure retention and support, and (2) an inner liner applied or affixed thereto. The liners are typically made of a chemically and/or abrasion resistant non-metallic material. The choice of liner materials depends on the intended use, such as to prevent contamination of the product by the outer pipe or conversely to prevent the outer pipe from corrosion, abrasion, or chemical attack caused by the transported media. Some common liner materials used include without limitation Polytetrafluoroethylene (PTFE), Polypropylene (PP), Perfluoroalkoxy (PFA), Polyvinylidene Difluoride (PVDF), Polyvinylidene Chloride (PVDC), Ethylenetetrafluoroethylene (ETFE), elastomerics, glass, ceramic glass, and others. Accordingly, various plastic-lined and glass-lined piping is commercially available and used in many applications.

Flanged connections may be used for joining multiple sections of lined pipe to create various piping system configurations and/or to connect the lined piping to various types of in-line components such as valves, pumps, process tanks, mixers, etc. One common arrangement of a flanged piping assembly for a lined piping system is shown in U.S. Patent Nos. 4,313,625 and 4,643,457, both of which are incorporated herein by reference in their entireties. The inner pipe liner is gradually flared at the end with respect to the longitudinal axis of the piping and protrudes radially outward beyond the terminal end of the pipe to at least partially cover and extend across a portion of the end face of the radially-extending flange. In some embodiments, such as in the case of plastic-lined pipe, the flared liner may be made by heating an exposed end of the liner followed by flaring or molding the liner over against the end face of the flange. A pressure seal is formed by compression at the piping joint by the mating inner liners of adjoining sections of piping when the flanges are coupled together by bolting, clamping, or other similar compression assembly means. Accordingly, this design eliminates the need for any additional gaskets or sealing members since the abutting flared or formed liner portions creates the seal and prevents the flowing material from contacting the metal outer pipe at the joints.

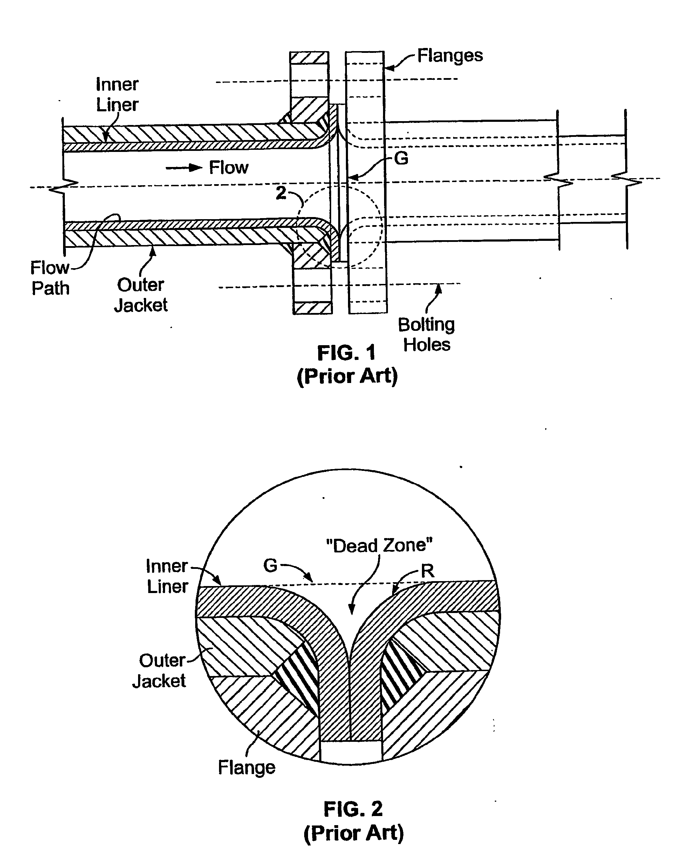

As more clearly shown herein in FIG. 1, however, each of mating flanges in the foregoing known joint design has a smooth, gradual inner liner radius R formed where the liner is flared outward and transitions between the inside axial portion of the pipe and end face of the flange. The radius defines convex, rounded end surface R that forms a smooth transition in contrast to sharp 90-degree liner end edges as found in other known designs such as shown in U.S. Patent No. 5,876,070, which is incorporated herein by reference in its entirety. Accordingly, when two lined flanges with smooth convex edges are coupled together, this creates a V-shaped annular groove or gap G between flanges at the adjoining sections of inner liners. The gap G results in a "dead-zone" where flowing material or product may collect in the piping system such as, for example, in pneumatic or vacuum material transport, liquid, liquid slurry, or other type of fluid piping systems. In pharmaceutical final product and/or food-grade lined piping system applications that must meet rigid sanitary standards, such product accumulation is undesirable and may lead to eventual contamination of the product over time. This requires periodic disassembly of the flanged piping joints to remove the accumulated debris or product, which is time consuming, increases maintenance expenses, and adds to final product costs. Although in some applications, food grade and pharmaceutical grade "sanitary-type" piping systems employing special clamped fittings having zero dead-space may be used to eliminate dead-zones (such as Tri-Clover^{®} fittings available from Alfa Laval of Richmond, Virginia), these systems are more expensive than a lined flange joint system.

An improved lined piping system flange joint with less, and preferably zero, dead-space is desirable.

### SUMMARY OF INVENTION

The present invention provides a specially profiled gasket that reduces the foregoing problems in lined piping systems utilizing flanged joints. In one embodiment, the gasket is configured and adapted to minimize or eliminate the dead space that would otherwise form at the flange joints between the liners. This embodiment prevents the accumulation of debris that might otherwise lead to contamination of the flowing product. Advantageously, this embodiment is intended to greatly reduce or preferably eliminate the need for periodic disassembly of the piping systems to remove the accumulated debris. Furthermore, this embodiment is intended to facilitate the use of a more cost-effective flanged lined piping system rather than conventional sanitary-grade systems having zero dead-space clamped joints.

According to one embodiment of the present invention, a lined piping assembly defining an interior flow path and a longitudinal axis includes: a first piping section terminated with a first flange and including an inner liner having a first flared portion extending radially outward along an end face of the first flange, the first flared portion defining a first convex liner end surface; a second piping section terminated with a second flange and including an inner liner having a second flared portion extending radially outward along an end face of the second flange, the second flared portion defining a second convex liner end surface; the first and second flared portions of the liners forming a gap therebetween having a narrow portion distal to the interior flow path of the piping assembly and a wider portion proximal to the interior flow path of the piping assembly; and a profiled gasket disposed between the first and second flared portions and having a configuration that fills the gap. By filling the gap, the profiled gasket serves to prevent accumulation of material at the juncture of the first and second flanges.

According to another embodiment of the present invention, a lined piping assembly defining an interior flow path and a longitudinal axis includes: a first piping section terminated with a first flange and including an inner liner having an axial portion and a radial portion extending radially outward along an end face of the first flange, the liner having a first rounded convex end surface formed at a transition between the axial and radial portions of the liner; a second piping section terminated with a second flange and including an inner liner having an axial portion and a radial portion extending radially outward along an end face of the second flange, the liner of the second piping section having a second rounded convex end surface formed at a transition between the axial and radial portions of the liner, the first and second rounded convex end surfaces defining an annular V-shaped gap therebetween opening into the interior flow path of the piping assembly when the first and second flanges are positioned proximate to each other; and a profiled gasket disposed between the first and second flanges, the gasket having a pair of concave side surfaces facing in opposing directions, each side surface being configured to engage one of the first and second rounded convex end surfaces for filling the annular V-shaped gap when the first and second flanges are drawn together.

According to another embodiment of the present invention, a lined piping assembly defining an interior flow path and a longitudinal axis includes: a first piping section terminated with a first flange and including an inner liner having an axial portion and a radial portion extending radially outward along an end face of the first flange, the liner having a first rounded convex end surface formed at a transition between the axial and radial portions of the liner; a second piping section terminated with a second flange and including an inner liner having an axial portion and a radial portion extending radially outward along an end face of the second flange, the liner of the second piping section having a second rounded convex end surface formed at a transition between the axial and radial portions of the liner; and a gasket including a generally V-shaped portion when viewed in cross-sectional profile for positioning along the interior flow path, the gasket having a width that gradually narrows in a radial direction away from the flow path, the gasket being engaged between the first and second convex end surfaces of the liners for forming a pressure seal when the first and second flanges are drawn together.

According to yet another embodiment of the present invention, a lined piping assembly defining an interior flow path and a longitudinal axis includes: a first piping section including a first flange and an inner liner having a first flared portion extending radially outward from an end of the first piping section, the first flared portion defining a first convex liner end surface; a second piping section including a second flange and an inner liner having a second flared portion extending radially outward from an end of the second piping section, the second flared portion defining a second convex liner end surface; the first and second flared portions of the liners being abutted and forming a V-shaped gap therebetween with the wider portion of the V-shaped gap located proximal to the interior flow path of the piping assembly; and a profiled gasket disposed between the first and second flared portions of the liners and having a configuration that fills the V-shaped gap when the first and second flared portions are drawn together to prevent accumulation of material in the gap. In one embodiment, the first and second flared portions of the liners each extend radially outward along the face of the first and second flanges, respectively. In another embodiment, the first and second flared portions of the liners each extend radially outward along a radially flared portion of the end of the first and second piping sections, respectively, wherein the first and second piping sections have lapped pipe ends. In one embodiment, the first and second flanges may be loose-fitting lap-joint rotating flanges.

In another embodiment, the present invention provides a profiled annular gasket adapted for flanged piping joints used in a lined piping system defining an interior flow path, which gasket includes: an annular inner portion for positioning along an interior flow path of a piping system, the annular inner portion having an axial width that gradually narrows in a radial direction away from the flow path; an annular outer portion adjacent to the inner portion; a pair of sides extending between the annular inner portion and the annular outer portion; and a recessed annular side surface disposed in each side of the gasket, each side surface being adapted and configured to engage a convex end surface of an inner liner of a pipe section. Preferably, the gasket is engageable between an opposing pair of the end surfaces defined by inner liners of two abutting pipe sections at a piping joint. The gasket forms a pressure seal when the piping sections are drawn together. In one embodiment, the piping joint is a flanged joint.

### BRIEF DESCRIPTION OF THE DRAWINGS

The features of several embodiments of the present invention will be described with reference to the following drawings where like elements are labeled similarly, and in which:
FIG. 1 is a partial cross-sectional side view of a prior art flanged joint for a lined piping system;
FIG. 2 is a magnified view of a portion of FIG. 1;
FIG. 3 is a partial cross-sectional side view of a first embodiment of a gasket and flanged joint for a lined piping system according to the present invention;
FIG. 4 is a magnified view of a portion of FIG. 3;
FIG. 5 is a partial cross-sectional side view of a second embodiment of a gasket and flanged joint for a lined piping system according to the present invention;
FIG. 6 is a magnified view of a portion of FIG. 5;
FIG. 7 is a partial cross-sectional side view of the gasket of FIGS. 3 and 4 according to the present invention;
FIG. 8 is a partial cross-sectional perspective view of the gasket of FIGS. 3 and 4 according to the present invention;
FIG. 9 is a detailed partial cross-sectional side view of a third embodiment of a gasket and flanged joint for a lined piping system according to the present invention;
   and
FIG. 10 is a partial cross-sectional side view of an alternative embodiment of a flanged joint for a lined piping system in the form of a pipe lap joint and gasket of FIGS. 3 and 4 according to the present invention.

All drawings are schematic and not drawn to scale.

### DETAILED DESCRIPTION OF THE INVENTION

In the description of embodiments of the present invention disclosed herein, any reference to direction or orientation is merely intended for convenience of description and is not intended in any way to limit the scope of the present invention. Moreover, although the features and benefits of the invention are illustrated by reference to particular embodiments, the invention expressly should not be limited to such embodiments illustrating some possible but non-limiting combination of features that may be provided alone or in other combinations of features.

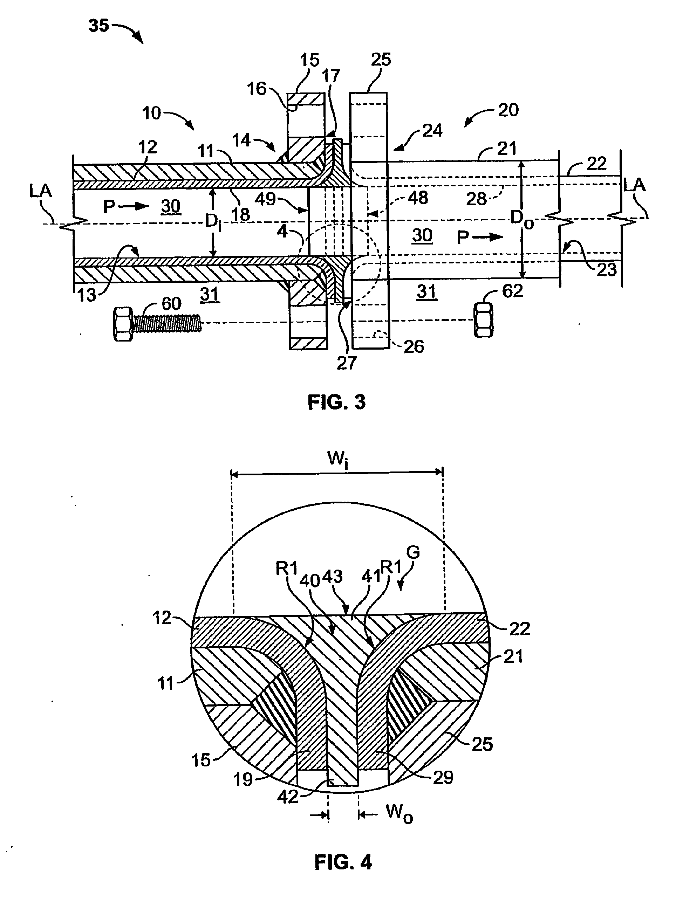

FIGS. 3 and 4 show a first embodiment of a profiled gasket that is configured to fill the gap or "dead zone" (see, e.g. FIG. 2) that may otherwise be created at flanged joints in a lined piping system. Lined pipe useable with this profiled gasket may be, for example, Resistoflex™ brand piping available from Crane Resistoflex^{®} Corporation of Marion, North Carolina.

Referring to FIGS. 3 and 4, one embodiment of a lined piping assembly is shown in the form of a flanged joint 35 that couples together two adjoining piping sections 10, 20, each section having an inner liner (12, 22). The flanged joint is coupled by conventional flange bolting including a plurality of bolts 60 and nuts 62. Piping sections 10 and 20 collectively define an interior 30 and an exterior 31 of the coupled piping assembly. Pipe section 10 includes an outer jacket or pipe 11 and an inner liner 12 having an inner surface 13 defining a flow path P therethrough. Pipe section 20 similarly includes an outer jacket or pipe 21 and an inner liner 22 having an inner surface 23 defining a flow path P therethrough. Although flow path P is shown in a direction from left to right, it will be appreciated that flow path P may be in an opposite direction and in any orientation including horizontal, vertical, or at an angle therebetween. In some embodiments, either one or both of pipe sections 10, 20 may be any type of pipe section including a nipple or similar connection disposed on various in-line piping system components and equipment such as, without limitation, fittings (e.g. elbows, tees, etc.), valves, pumps, strainers, process tanks, heaters, etc. adapted to connect to a piping system. Accordingly, the invention is not limited in use to piping-to-piping joints alone.

Pipe sections 10, 20 each define a longitudinal axis "LA" extending along the flow path P which is defined and referred to herein as the axial direction. A radial direction is defined as being transverse or perpendicular to the longitudinal axis LA and the term as used herein is given its conventional meaning in the art. Each pipe section 10, 20 has an inside diameter Di measured between diametrically opposed inner surfaces 13, 23 of liners 18, 28, respectively. Each pipe section 10, 20 further has an outside diameter Do measured between diameter opposed exterior surfaces of outer pipes 11, 21.

With continuing reference to FIGS. 3 and 4, outer pipes 11, 21 may be made of any suitable material commonly used in commercially-available lined piping systems. In some embodiments, outer pipes 11, 21 may be, for example, metal, such as without limitation steel, aluminum, copper, brass, cast iron, or other suitable metals. Inner liners 12, 22 may be, for example, made of any suitable materials commonly used in conventional lined piping systems, such as without limitation PTFE, PP, PFA, PVDF, elastomerics, rubbers, and others. In a preferred embodiment, inner liners 12, 22 are made of a pharmaceutical-grade or food-grade material of the type used in sanitary piping systems.

With continuing reference to FIGS. 3 and 4, pipe sections 10, 20 each have terminal ends 14, 24 that are terminated in one embodiment with radial flanges 15, 25 extending in a radial direction transverse to longitudinal axis LA. Flanges 15, 25 each define respectively a radial end face 17, 27 for mating to an opposing flange. Flanges 15, 25 may be formed as an integral part of outer pipes 11, 21, or as separate components attached to outer pipes 11, 21 by welding, threading, or other suitable conventional means used in the art, or loose. In one embodiment, flanges 15, 25 may be welded to outer pipes 11, 21.

It will therefore be appreciated that the flanges may be of any type suitable for use with lined piping systems wherein the piping liners are abutted to form a joint, including but not limited to loose lap joint/rotating flanges, slip-on welded flanges, socket weld flanges, weld-neck flanges, threaded flanges, etc. Accordingly, the invention is not limited to, or for use in, any particular type of flange.

In one embodiment, with reference to FIG. 3, flanges 15, 25 each include a plurality of conventional circumferentially-spaced bolting holes 16, 26 configured to receive flange bolts 60 used with nuts 62 for coupling the two flanges together and drawing piping sections 10 and 20 together. However, other suitable means such as, without limitation, clamping may be used to couple the flanges together.

With continuing reference to FIGS. 3 and 4, in one embodiment, inner liner 12 has a flared portion that extends radially outward from the interior 30 of pipe section 10 in a direction transverse to longitudinal axis LA, and more preferably along at least a portion of radial end face 17 of flange 15 as shown to form part of a pressure seal at the flange joint. In one embodiment, accordingly, inner liner 12 is a continuous element that includes a flared radial flange liner portion 19 (see FIG. 4) and a contiguous axial liner portion 18 extending along longitudinal axis LA. Similarly, in one embodiment, inner liner 22 of pipe section 20 also preferably has a flared portion that extends radially outward along at least a portion of radial end face 27 of flange 25 in the same manner to be coupled with opposing end face 17 of flange 15, as further described herein. Inner liner 22 therefore may also be a continuous element that includes a flared radial liner portion 29 (see FIG. 4) and a contiguous axial liner portion 28 extending along longitudinal axis LA. In one embodiment, inner liners 12, 22 are permanently adhered to their respective outer pipes 11, 21 and flanges 15, 25.

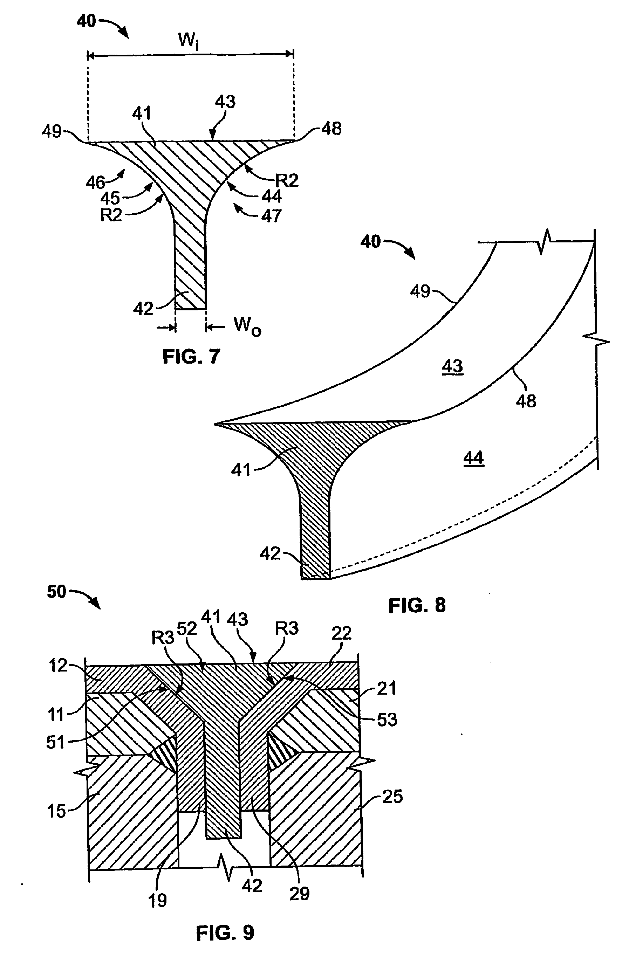

Referring to FIG. 4, liners 12 and 22 define a radial, generally convex liner end surface R1 formed at a transition between radial liner portions 19, 29 and axial liner portions 18, 28 (shown in FIG. 3), respectively. Convex liner end surface R1 may be rounded and smooth in cross-sectional profile in some embodiments as shown (FIGS. 3-6). In other embodiments (e,g, as shown in FIG. 9), convex liner end surface R3 may be chamfered or angled in cross-sectional profile. Since the convex liner end surface shape of the applied liner will be generally dictated by the shape of the underlying pipe end preparation used (as shown, e.g., in FIGS. 4 and 9), numerous variations are possible in the liner end surface shape. Accordingly, the invention is not limited to gaskets fitting any particular liner end surface shape.

With continuing reference to the embodiment shown in FIGS. 3 and 4, an annular and generally triangular (or V-shaped) groove or gap G is formed between flanges 15 and 25 when pipe sections 10, 20 are positioned proximate to each other as shown (see also FIG. 2). Gap G extends circumferentially along the inner surfaces 13 and 23 of inner liners 12, 22 of pipe sections 10 and 20, respectively. The widest portion of gap G lies closest to inner surfaces 13, 23 proximal to the flow path P and the narrowest portion of gap G lies more distal to and radially outward from the flow path P than the wider portion at joint 35. It will be appreciated that gap G may not be perfectly V-shaped, but this term is used herein with the understanding that gap G will generally approximate a V-shape in cross-section. Depending on the manufacturing process, and the type of material or product being transported in the piping system, debris may accumulate in gap G, and this accumulation may be undesirable, particularly for a lined piping system.

With continuing reference to FIGS. 3 and 4, gap G is filled in one embodiment by inclusion of a profiled annular gasket 40 having a complementary V-shaped portion which extends circumferentially in gap G. Preferably, gasket 40 is continuous in structure forming an unbroken ring-shaped element that is configured and adapted to fill gap G. With additional reference to FIGS. 7 and 8, gasket 40 includes an inner portion 41 disposed in contact with the two generally convex liner end surfaces R1 on inner surfaces 13 and 23 of inner liners 12 and 22, respectively, when installed. In one embodiment, inner portion 41 of gasket 40 has a generally triangular or V shape, which progressively narrows or tapers in width in a radial direction away from the interior 30 to the exterior 31 of the piping, wherein the gasket 40 is dimensioned and toleranced to approximately "match" or align with the adjacent surfaces.

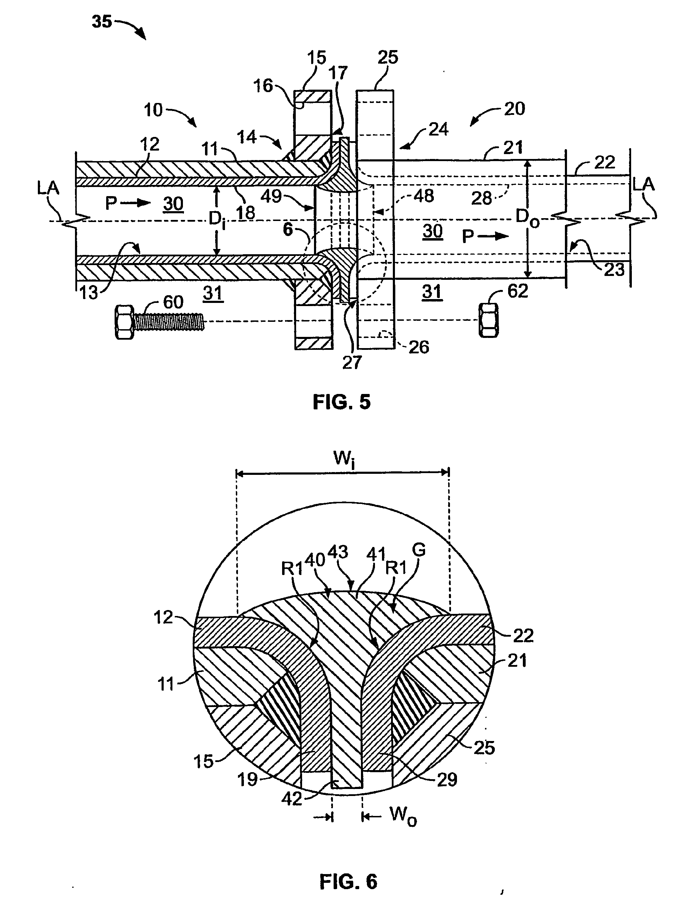

Inner portion 41 of gasket 40 further defines an inner axial gasket face 43 which is in direct communication with the flow path P and exposed to the material or media being transported in piping sections 10, 20. Accordingly, gasket face 43 forms part of the flow path P in the interior 30 of piping sections 10, 20 when installed between flanges 15 and 25. In one embodiment, inner gasket face 43 has a substantially flat surface which preferably aligns with and is parallel to axial liner portions 18, 28 as shown. In this embodiment, the inside diameter of gasket 40 measured between diametrically opposed sections of gasket at face 43 is approximately equal to the inside diameter Di of piping sections 10 and 20 measured between diametrically opposed inner surfaces 13, 23 of liners 18, 28 to form a relatively smooth flow path P without gaps between the flanges. In other embodiments as shown in FIGS. 5 and 6, inner gasket face 43 may have a convex shaped surface in profile to produce a venturi effect for increasing flow velocity and clean sealing of the mating area between the gasket and interior 30 of piping sections 10, 20. Accordingly, when a convex shaped gasket face 43 is provided, the inside diameter of gasket 40 will be slightly less than the inside diameter Di of piping sections 10 and 20.

Gasket 40 further includes an outer portion 42 that is disposed opposite inner portion 41 as shown in FIGS. 4, 6, 7, and 9. In one embodiment, outer portion 42 may be generally rectangular in cross-sectional profile and may be defined as beginning where the tapered sides 46, 47 of inner portion 41 end and become generally parallel to each other. Outer portion 42 is positioned toward the exterior 31 of piping sections 10, 20 at flanges 15, 25, and does not have portions in contact with flow path P unlike inner portion 41. Preferably, outer portion 42 extends outward to a radial distance at least equal to or greater than flared radial liner portions 19, 29 so as to securely compress and retain gasket 40 between the coupled flanges 15, 25 when drawn together.

Referring to FIGS. 4 and 7, inner portion 41 of gasket 40 has an axial width Wi and outer portion 42 has an axial width Wo. Preferably, the maximum width of Wi is larger than the maximum width of Wo to correspond with the general V-shaped configuration of gap G. Accordingly, in a preferred embodiment, gasket 40 becomes progressively narrower in width in a radially outward direction from the interior 30 of piping sections 10, 20 to the exterior 31 of the same. The widest portion of gasket 40 is therefore disposed closest to inner surfaces 13 and 23 of pipe sections 10 and 20 adjacent to the flow path P.

With continuing reference to FIGS. 4 and 7, gasket 40 further includes a pair of axially spaced-apart radial sides 46 and 47 formed along inner portion 41 and outer portion 42. In one embodiment, sides 46, 47 converge towards each other along inner portion 41 and are disposed in parallel relation to each other along outer portion 42 as shown in FIG. 7. Sides 46 and 47 define a pair of spaced-apart annular sealing edges 48, 49 that extend circumferentially along the inner diameter of pipe sections 10, 20 when the gasket 40 is mounted in flanged joint 35. As shown, for example, in FIG. 4, sealing edges 48, 49 engage and mate with inner surfaces 13, 23 of liners 12, 22, respectively, on opposite sides of gasket 40 to form a seal in the interior 30 of pipe sections 10, 20 and to provide a smooth transition between inner surfaces 13, 23 at the joint. Accordingly, in one embodiment, sealing edges 48, 49 define annular line contact between gasket 40 and inner surfaces 13, 23 on the interior 30 of the piping to seal flanged joint 35. The adapted detailed design and configuration of any particular gasket 40 would preferably be dimensioned and toleranced to appropriately "match" the adjacent surfaces.

In a further embodiment, with reference to FIGS. 3-4 and 7-8, sides 46, 47 of gasket 40 each further define a respective annular axial side surface 44, 45 that is configured and adapted to receive and engage the two generally convex liner end surfaces R1 on inner liners 12, 22. In one embodiment, side surfaces 44 and 45 preferably face in opposite axial directions. In one embodiment, side surfaces 44, 45 are preferably formed as recesses in each side 46, 47 of gasket 40, and more preferably may be generally concave in shape as shown. Side surfaces 44, 45 have a radius of curvature R2 selected to complement and approximate the shape or radius of the mating liner end surfaces R1 of each radial flange liner portion 19 and 29. It will be appreciated by those skilled in the art that the radius of curvature of R2 of side surfaces 44, 45 need not exactly match the radius or shape of end surfaces R1 of the flange liners 12, 22 since the gasket 40 and/or the liners may be compressible and deformable to a certain degree depending on the types of materials selected for the gasket and liners. In other embodiments to be further described herein with reference to FIG. 9, side surfaces 44, 45 may have other suitable cross-sectional shapes such as angular-shaped recesses to complement the shapes of the mating convex liner end surfaces. Thus the invention is not limited by the shape of side surfaces 44, 45 as described by the exemplary embodiments set forth herein.

Profiled gasket 40 may be made of any suitable metallic or non-metallic material depending on the requirements of the intended application. In a preferred embodiment, gasket 40 is made of a pharmaceutical-grade or food-grade compatible material suitable for use where a chemically resistant lined process piping system is needed. In some embodiments, gasket 40 may be made of a relatively resilient and deformable material such as PTFE, enhanced PTFE, reinforced PTFE or other suitable materials compatible with pharmaceutical-grade or food-grade sanitary process piping systems. In other embodiments, gasket 40 may be made of a relatively hard or minimally deformable non-metallic material such as carbon fiber, para-aramid synthetic fiber such as Kevlar™ available from E. I. du Pont de Nemours and Company of Wilmington, Delaware, polyamide-imide such as Torlon® available from Solvay Advanced Polymers of Alpharetta, Georgia, composites, or similar. In yet other embodiments, gasket 40 may be made of a hard metallic material such as wrought corrosion-resistant nickel-molybdenum-chromium alloy such as Nikelvac HC-276™, pharmaceutical grade stainless steels, and other similar metals. In other embodiments, gasket 40 may be made of any non-metallic or metallic material for non-sanitary grade process piping. Accordingly, it will be appreciated that the invention is not limited to any particular material for gasket 40.
It is well within the ambit of those skilled in the art to select a material appropriate for the intended application. Gasket 40 may be made by any suitable commercial manufacturing process typically used to make gaskets; the particular process selected for manufacture being dependent upon the type of material selected for the gasket. Gasket 40 may therefore be made by techniques including, without limitation, molding, casting, forging, machining, and combinations thereof or other suitable methods.

Figure 9 shows an alternative embodiment of a flanged joint 50 for use in a piping assembly. In FIG. 9, a common angled or chamfered end preparation has been used in place of the more rounded pipe end prep shown in FIGS. 3 and 5. When liners 12, 22 are applied to the interior of piping sections 11,21, an angled convex liner end surface R3 is formed in liners 12 and 22, as shown in FIG. 9, which generally approximates the shape of the piping end chamfer. Accordingly, a profiled gasket 52 is provided having complementary angled-shape recessed side surfaces 51, 53. Alternatively, depending on the degree of the angles used for angled convex liner end surface R3, other gasket configurations such as gasket 40 as shown in FIG. 7 for example may be used depending on whether the gasket and/or liners 12, 22 are made of sufficiently pliable material to deform and create an adequate pressure seal at the flange joint.

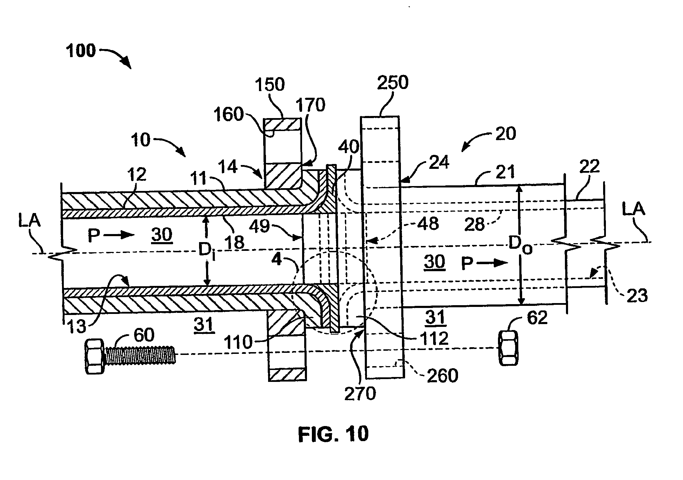

FIG. 10 shows an alternative embodiment of a commonly used piping assembly in the form of a flanged lap joint 100 with loose lap-joint rotating flanges 150, 250. Piping sections 10, 20 are generally the same as shown, for example, in FIGS. 3 and 4. However, outer pipes 11, 21 are terminated with outward, radially-extending flared pipe ends 110, 112. Inner liners 12, 22 are flared or formed radially outward over the flared pipe ends 110, 112. Liners 12, 22 are flared and formed to extend radially-outward along the flared pipe ends 110, 112 as shown. The joint 100 is formed when flared ends 110, 112 of piping sections 10 and 20 are abutted, which also forms a generally triangular or V-shaped gap G therebetween. Profiled gasket 40 according to principles of the present invention is disposed between flared pipe ends 110, 112 and in gap G to reduce or preferably eliminate any dead space. The lap joint flanges 150, 250 shown allow the flanges to be conveniently rotated to a desired position before tightening the flange bolting (not shown) for convenient assembly and disassembly of piping sections 10, 20.

Although embodiments of the invention have been most conveniently described with reference to connection of two piping sections, it will be appreciated that the invention may be used in connecting any type of inline components of a piping or conveying system. In addition, embodiments according to principles of the present invention may be used in any type of fluid transport system for conveying solids, liquids, gases or combinations thereof where it is desirable to eliminate dead zones at piping joints. Some exemplary applications include without limitation conveying abrasive slurries where annular gaps at the piping joints can increase fluid turbulence resulting in abrasion and erosion of the piping liner at the flanged joints; pneumatic/vacuum transport of dry solids suspended in air or other gases; liquid transport with or without dissolved solids or solids in suspension, etc. In addition, it will be appreciated that the invention may be used with any type of lined piping system including plastic-lined piping, glass-lined piping, elastomeric or rubber lined piping, etc. Accordingly the invention is not limited in use to any particular type of inner liner material.

While the foregoing description and drawings represent the preferred embodiments of the present invention, it will be understood that various additions, modifications and substitutions may be made therein without departing from the spirit and scope of the present invention as defined in the accompanying claims. In particular, it will be clear to those skilled in the art that the present invention may be embodied in other specific forms, structures, arrangements, proportions, sizes, and with other elements, materials, and components, without departing from the spirit or essential characteristics thereof. One skilled in the art will appreciate that the invention may be used with many modifications of structure, arrangement, proportions, sizes, materials, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A lined piping assembly defining an interior flow path and a longitudinal axis, the assembly comprising:
a first piping section (10) terminated with a first flange (15) and including an inner liner (12) having a first flared portion (19) extending radially outward along an end face of the first flange, the first flared portion defining a first convex liner surface;
a second piping section (20) terminated with a second flange (25) and including an inner (22) liner having a second flared portion (29) extending radially outward along an end face of the second flange, the second flared portion defining a second convex liner end surface, the first and second flared portions of the liners forming a gap (9) there between, the gap having a narrow portion distal to the flow path of the piping assembly and a wider portion proximal to the interior flow path of the piping assembly; and
a profiled gasket (40) disposed between the first and second flared portions having a configuration that fills the gap, wherein the gasket includes an inner portion (41) in communication with the interior flow path and an opposite outer portion (42), the inner portion and the outer portion each having a width, the width of the inner portion being larger than the width of the outer portion, and wherein the gasket further includes a pair of recessed side surfaces (44, 45) which are concave and rounded in cross-sectional shape, each recessed side surface configured to receive and engage one of the first and second convex liner surfaces so that the gasket (40) becomes progressively narrower in width in a radically outward direction.

2. The lined piping assembly of claim 1, wherein the inner gasket portion has a substantially flat axial gasket face in communication with the interior flow path.

3. The lined piping assembly of claim 1, wherein the inner gasket portion has a substantially convex axial gasket face in communication with the interior flow path.

4. The lined piping assembly of claim 1, wherein the profiled gasket is made of a non-metallic material.

5. The lined piping assembly of claim 1, wherein the profiled gasket is made of a metallic material.

## Patentansprüche

1. Ausgekleidete Rohranordnung, welche einen internen Fließweg und eine longitudinale Achse definiert, wobei die Anordnung umfasst:
einen ersten Rohrabschnitt (10), welcher mit einem ersten Flansch (15) beendet ist und eine innere Auskleidung (12) enthält mit einem ersten aufgebördelten Bereich (19), welcher sich radial nach außen entlang einer Endoberfläche des ersten Flansches erstreckt, wobei der erste aufgebördelte Bereich eine erste konvexe Auskleidungsoberfläche definiert;
einen zweiten Rohrabschnitt (20), welcher mit einem zweiten Flansch (25) beendet ist und eine innere Auskleidung (22) enthält mit einem zweiten aufgebördelten Bereich (29), welcher sich radial nach außen entlang einer Endoberfläche des zweiten Flansches erstreckt, wobei der zweite aufgebördelte Bereich eine zweite konvexe Auskleidungsendoberläche definiert, die ersten und zweiten aufgebördelten Bereiche der Auskleidungen eine Lücke (9) dazwischen bilden, die Lücke einen engen Bereich entfernt vom Fließweg der Rohranordnung und einen weiteren Bereich in der Nähe des internen Fließwegs der Rohranordnung aufweist; und
eine profilierte Dichtung (40), welche zwischen den ersten und zweiten aufgebördelten Bereichen angeordnet ist mit einer Konfiguration, welche die Lücke ausfüllt, wobei die Dichtung einen inneren Bereich (41) in Verbindung mit dem internen Fließweg und einen entgegengesetzten äußeren Bereich (42) aufweist, wobei der innere Bereich und der äußere Bereich jeweils eine Breite aufweisen, die Breite des inneren Bereichs größer ist als die Breite des äußeren Bereichs, und wobei die Dichtung ferner ein Paar an zurückgesetzten Seitenoberflächen (44, 45) aufweist, welche konkav und in Querschnittsform abgerundet sind, wobei jede zurückgesetzte Seitenoberfläche so konfiguriert ist eine der ersten und zweiten konvexen Auskleidungsoberflächen aufzunehmen und in diese einzugreifen, so dass die Dichtung (40) schrittweise enger in der Breite in radialer Auswärtsrichtung wird.

2. Ausgekleidete Rohranordnung gemäß Anspruch 1, wobei der innere Dichtungsbereich eine im wesentlichen flache axiale Dichtungsoberfläche in Verbindung mit dem internen Fließweg aufweist.

3. Ausgekleidete Rohranordnung gemäß Anspruch 1, wobei der innere Dichtungsbereich eine im wesentlichen konvexe axiale Dichtungsoberfläche in Verbindung mit dem internen Fließweg aufweist.

4. Ausgekleidete Rohranordnung gemäß Anspruch 1, wobei die profilierte Dichtung aus einem nicht metallischen Material hergestellt ist.

5. Ausgekleidete Rohranordnung gemäß Anspruch 1, wobei die profilierte Dichtung aus einem metallischen Material hergestellt ist.

## Revendications

1. Assemblage de tuyauterie bordé définissant une voie d'écoulement intérieure et un axe longitudinal, l'assemblage comprenant :
une première section de tuyauterie (10) terminée par une première bride (15) et comportant un revêtement intérieur (12) ayant une première partie évasée (19) s'étendant radialement vers l'extérieur le long d'une face d'extrémité de la première bride, la première partie évasée définissant une première surface de revêtement convexe,
une seconde section de tuyauterie (20) terminée par une seconde bride (25) et comprenant un revêtement (22) interne ayant une seconde partie évasée (29) s'étendant radialement vers l'extérieur le long d'une face d'extrémité de la seconde bride, la deuxième partie évasée définissant une seconde surface d'extrémité de revêtement convexe, les première et seconde parties évasées des revêtements formant un espace (9) entre eux, l'espace ayant une partie étroite distante de la voie d'écoulement de l'assemblage de tuyauterie et une partie plus large à proximité de la voie d'écoulement intérieure de l'assemblage de tuyauterie, et
un joint d'étanchéité profilé (40) disposé entre les première et seconde parties évasées ayant une configuration qui remplit l'espace, dans lequel le joint d'étanchéité comprend une partie interne (41) en communication avec la voie d'écoulement intérieure et une partie externe opposée (42), la partie interne et la partie externe ayant chacune une largeur, la largeur de la partie interne étant supérieure à la largeur de la partie externe, et dans lequel le joint d'étanchéité comprend en outre une paire de surfaces latérales évidées (44, 45) lesquelles sont concaves et arrondies en coupe transversale, chaque surface latérale évidée étant configurée pour recevoir et mettre en prisé l'une des première et seconde surfaces de revêtement convexes de sorte que la largeur du joint d'étanchéité (40) devient progressivement plus étroite dans une direction radicatement vers l'extérieur.

2. Assemblage de tuyauterie selon la revendication 1, dans lequel la partie de joint d'étanchéité interne présente une face de joint d'étanchéité axiale sensiblement plate en communication avec la voie d'écoulement intérieure.

3. Assemblage de tuyauterie selon la revendication 1, dans lequel la partie de joint d'étanchéité interne présente une face de joint d'étanchéité axiale sensiblement convexe en communication avec la voie d'écoulement intérieure.

4. Assemblage de tuyauterie selon la revendication 1, dans lequel le joint d'étanchéité profilé est constitué d'un matériau non métallique.

5. Assemblage de tuyauterie selon la revendication 1, dans lequel le joint d'étanchéité profilé est constitué d'un matériau métallique.
